(19) Europäisches Patentamt
European Patent Office
Office européen des brevets

(11) Publication number: **0 283 972 B1**

(12) # EUROPEAN PATENT SPECIFICATION

(45) Date of publication of patent specification: **18.08.93** (51) Int. Cl.[5]: **C08F 210/02**, C08F 4/62

(21) Application number: **88104410.1**

(22) Date of filing: **19.03.88**

(54) **Process for production of ethylene-based copolymers.**

(30) Priority: **27.03.87 JP 71706/87**

(43) Date of publication of application:
**28.09.88 Bulletin 88/39**

(45) Publication of the grant of the patent:
**18.08.93 Bulletin 93/33**

(84) Designated Contracting States:
**BE CH DE FR GB IT LI NL SE**

(56) References cited:
**EP-A- 0 090 374**
**EP-A- 0 180 982**
**FR-A- 2 169 125**

(73) Proprietor: **IDEMITSU KOSAN COMPANY LIMITED**
**1-1, Marunouchi 3-chome Chiyoda-ku**
**Tokyo(JP)**

(72) Inventor: **Tanaka, Masato c/o Idemitsu Kosan Company Limited**
**No. 1280, Kamiizumi Sodegaura-machi**
**Kimitsu-gun Chiba-ken(JP)**
Inventor: **Machida, Shuji c/o Idemitsu Kosan Company Limited**
**No. 1280, Kamiizumi Sodegaura-machi**
**Kimitsu-gun Chiba-ken(JP)**

(74) Representative: **Türk, Dietmar, Dr. rer. nat. et al**
**Türk, Gille, Hrabal, Leifert Patentanwälte**
**Brucknerstrasse 20**
**D-40593 Düsseldorf (DE)**

EP 0 283 972 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a process for producing ethylene-based copolymer from ethylene and unsaturated carboxylic acids and/or their esters. Ethylene-based copolymers produced by the process of the present invention can be effectively used in applications in which properties such as bonding properties, printing properties, low temperature flexibility and low temperature impact resistance are required.

Polyethylene has been widely used because it is excellent in water resistance, chemical resistance, and electric characteristics. However, since polyethylene is chemically inert, it has a disadvantage of being poor in printing and dyeing properties, and its use in applications where such properties are required is restricted.

In order to improve the poor printing and dyeing properties of polyethylene, a method of copolymerizing ethylene and compounds copolymerizable therewith has been proposed. For example, Japanese Patent Publication No. 23317/1974 discloses a method of copolymerizing ethylene and acrylic ester in the presence of a Lewis acid compound by the use of a polymerization catalyst.

This method, however, has disadvantages in that copolymerization activity is low and the conversion of acrylic ester into copolymer is low.

### SUMMARY OF THE INVENTION

The present invention is intended to overcome the above problems and an object of the present invention is to provide a process for efficiently producing ethylene-based copolymers.

It has been found that the copolymerization activity and the conversion of unsaturated carboxylic acid or its ester into the desired copolymer can be increased by copolymerizing ethylene and unsaturated carboxylic acid or its ester in the presence of a specified catalyst.

The present invention relates to a process for producing ethylene-based copolymers which comprises copolymerizing ethylene and unsaturated carboxylic acids and/or their esters in the presence of a catalyst comprising:

(A) a chromium compound;

(B) at least one compound selected from the group consisting of the carboxylic acid salts, organic phosphoric acid salts, organic phosphorous acid salts, alkoxides and halides of each of magnesium and manganese, and the carboxylic acid salts and halides of calcium; and

(C) an organometallic compound of a metal belonging to Groups I to V of the Periodic Table.

### DETAILED DESCRIPTION OF THE INVENTION

In the process of the present invention, as the component (A) of the catalyst, a chromium compound is used. As the chromium compound, at least one compound selected from the group consisting of carboxylic acid salts of chromium, chromium alkoxy compounds, chromium chelate compounds, chromium $\pi$-complexes, chromium aryl compounds and chromium halide is used.

As the carboxylic acid salts of chromium, compounds represented by the general formulae: $Cr(OCOR^3)_3$, $Cr(OCOR^3)_3 \cdot (R^4OR^5)_\ell$, $Cr(OCOR^3)_3 \cdot (R^6COOR^7)_\ell$, $Cr(OCOR^3)_3 \cdot R^8(COOR^9)_2$, $Cr(OCOR^3)_3 \cdot [R^{10}{}_2CO]_\ell$ and $Cr(OCOR^3)_3 \cdot [(R^{11}CO)_2O)]_\ell$ (wherein $R^3$ to $R^{11}$ are each an alkyl group having 1 to 20 carbon atoms, an alkenyl group, a vinyl group, a cycloalkyl group, an aryl group, a haloalkyl group, an aralkyl group or a hydrogen atom, and $\ell$ is a real number of 1 or more) are used. More specifically, aliphatic carboxylic acid salts such as $Cr(CH_3COO)_3$, $Cr[C_4H_9CH(C_2H_5)COO]_3$, $Cr(C_{17}H_{35}COO)_3$; aromatic carboxylic acid salts such as $Cr(C_6H_5COO)_3$, $Cr(CH_3 \cdot C_6H_5COO)_3$, $Cr(C_{10}H_7COO)_3$, and the carboxylic anhydride adducts, ester adducts, ether adducts and ketone adducts of the above carboxylic acid salts can be used. These adducts include fatty acid anhydrides such as acetic anhydride, propionic anhydride, butyric anhydride, isobutylic anhydride, valeric anhydride, isovaleric anhydride, and maleic anhydride, aromatic acid anhydrides such as benzoic anhydride, toluic anhydride, cinnamic anhydride, and phthalic anhydride; aliphatic esters such as methyl formate, ethyl formate, propyl formate, butyl formate, methyl acetate, ethyl acetate, propyl acetate, butyl acetate, hexyl acetate, octyl acetate, vinyl acetate, phenyl acetate, benzyl acetate, cyclohexyl acetate, methyl propionate, ethyl propionate, propyl propionate, butyl propionate, octyl propionate, phenyl propionate, benzyl propionate, methyl butyrate, ethyl butyrate, propyl butyrate, butyl butyrate, amyl butyrate, octyl butyrate, methyl valerate, ethyl valerate, propyl valerate, butyl valerate, methyl acrylate, ethyl acrylate, butyl acrylate, 2-ethylhexyl acrylate, methyl methacrylate, ethyl methacrylate, butyl methacrylate, methyl

chloroacetate, ethyl dichloroacetate, ethyl crotonate, ethyl pivalate, dimethyl maleate, and ethyl cyclohexanecarboxylate; aromatic esters such as methyl benzoate, ethyl benzoate, propyl benzoate, butyl benzoate, octyl benzoate, cyclohexyl benzoate, benzyl benzoate, methyl toluate, ethyl toluate, ethyl ethylbenzoate, and ethyl anisate; ethers such as methyl ether, ethyl ether, isopropyl ether, n-butyl ether, amyl ether, tetrahydrofuran, anisole, and diphenyl ether; ketones such as acetone, methyl ethyl ketone, methyl isobutyl ketone, acetophenone, benzophenone, and benzoquinone.

As the chromium alkoxy compound, compounds represented by the general formula (I):

$Cr(OR^{12})_{4-m}X^{1}{}_{m}$ (I)

are used. In the general formula (I), $R^{12}$ represents an alkyl group having 1 to 20 carbon atoms, an alkenyl group having 1 to 20 carbon atoms, a cycloalkyl group having 3 to 20 carbon atoms, an aryl group having 6 to 20 carbon atoms or an aralkyl group having 7 to 20 carbon atoms. Representative examples of $R^{12}$ are a methyl group, an ethyl group, a n-propyl group, an iso-propyl group, a n-butyl group, an iso-butyl group, a tert-butyl group, a hexyl group, a 2-ethylhexyl group, and a phenyl group. $X^1$ represents a halogen atom, e.g., chlorine, bromine and iodine. m is a real number of $0 \leqq m < 4$.

Examples of the compound represented by the general formula (I) are tetramethoxychromium, tetraethoxychromium, tetra-n-butoxychromium, tetra-i-butoxychromium, tetra-tert-butoxychromium, tetrahexyloxychromium, tetrastearyloxychromium, tetraphenoxychromium, triethoxychromium monochloride, diethoxychromium dichloride, tri-n-butoxychromium monochloride, and tri-tert-butoxychromium monochloride.

Representative examples of the above chromium chelating compound are chromium trisacetylacetonate having the formula: $Cr(acac)_3$, chromium tris(2-methyl-1,3-butanedionate) having the formula: $Cr(mbd)_3$, chromium tris(1,3-butanedionate) having the formula: $Cr(bd)_3$, chromium tris(trifluoroacetylacetonate), and chromium tris(hexafluoroacetylacetonate). (acac) represents an acetylacetonate group, and chromium trisacetylacetonate is expressed by the structural formula:

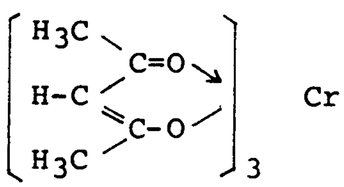

(mbd) represents a 2-methyl-1,3-butanedionate group, and chromium tris(2-methyl-1,3-butanedionate) is expressed by the structural formula:

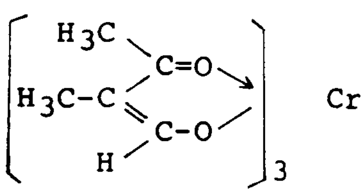

(bd) represents a 1,3-butanedionate group, and chromium tris(1,3-butanedionate) is expressed by the structural formula:

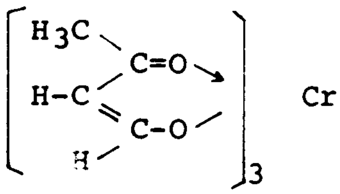

.

Chromium tris(trifluoroacetylacetonate) is expressed by the structural formula:

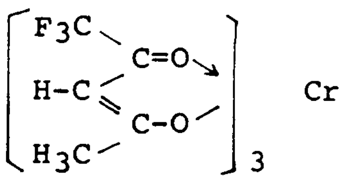

,

and chromium tris(hexafluoroacetylacetonate) is expressed by the structural formula:

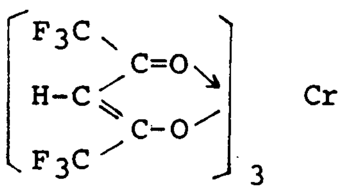

.

Chromium π-complexes include aromatic ring π-complexes such as biscyclopentadienylchromium represented by the formula: $(cp)_2Cr$ (wherein (cp) represents a cyclopentadienyl group), bisbenzenechromium represented by the formula: $(C_6H_6)_2Cr$, diphenylbenzenechromium represented by the formula: $(2C_6H_5)(C_6H_6)Cr$, dihexamethylbenzenechromium represented by the formula:

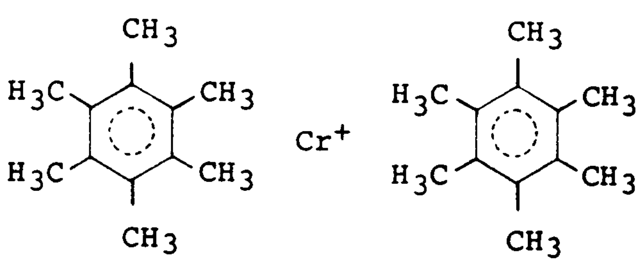

π-cyclopentadienylbromochromium acetylacetonate represented by the formula:

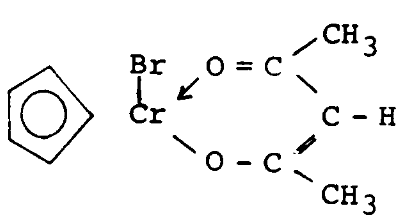

,

$\pi$-cyclopentadienyl(benzene)chromium represented by the formula:

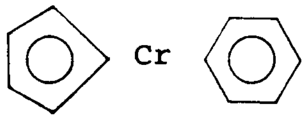

,

and
$\pi$-cyclopentadienyl-$\pi$-cycloheptadienylchromium represented by the formula:

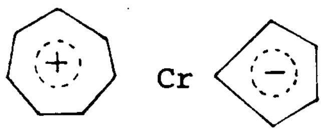

,

$\pi$-allyl complexes such as tris($\eta$-allyl)chromium, and tetraquis($\eta$-allyl)chromium.

In addition, as the chromium aryl compound, diphenylchromium, triphenyltris(tetrahydrofuran)chromium and the like can be used.

Preferred as the above chromium halide are those represented by the general formula: $CrX^2_n$ (wherein $X^2$ is a halogen atom, and n is 2 or 3). Representative examples are chromium trichloride, chromium tribromide, chromium triiodide, chromium dichloride, chromium dibromide, and chromium diiodide.

In the present invention, it is preferred that one or more chromium compounds selected from the above compounds be used as the component (A).

In the present invention, as the component (B), at least one compound selected from the group consisting of the carboxylic acid salts, organic phosphoric acid salts, organic phosphorous acid salts, alkoxides and halides of each of magnesium and manganese, and the carboxylic acid salts and halides of calcium is used.

Representative examples of the magnesium salts and the manganese salts are magnesium carboxylate represented by the general formula: $Mg(R^{13}COO)_2$ or $Mg(R^{13}COO)X^3$ (wherein $R^{13}$ is an alkyl group having 1 to 20 carbon atoms, an aryl group or an aralkyl group, and $X^3$ is a halogen atom), manganese carboxylate represented by the general formula: $Mn(R^{13}COO)_2$ or $Mn(R^{13}COO)X^3$ (wherein $R^{13}$ and $X^3$ are the same as defined above), and calcium carboxylate represented by the general formula: $Ca(R^{13}COO)_2$ or $Ca(R^{13}COO)$-$X^3$ (wherein $R^{13}$ and $X^3$ are the same as defined above).

In the general formulae representing magnesium carboxylate, manganese carboxylate and calcium carboxylate, $R^{13}$ is as described above, and it is preferably an aliphatic alkyl group having at least 6 carbon atoms and particularly preferably an aliphatic alkyl group having at least 8 carbon atoms. Concrete examples are a hexyl group, a heptyl group, an octyl group, a 2-ethylhexyl group, a nonyl group, a decyl group, a lauryl group, a myristyl group, a heptadecyl group, and a stearyl group. In addition, an unsaturated alkyl group, such as an oleyl group, can be used.

The organic phosphoric acid salts and organic phosphorous acid salts of magnesium and manganese are not critical and various compounds can be used. Preferred are compounds obtained by reacting organomagnesium compounds or organomanganese compounds and hydrogen-containing phosphorus compounds. Suitable examples of the organomagnesium compounds or organomanganese compounds are compounds represented by the general formula: $R^{14}R^{15}M^1$ (wherein $R^{14}$ and $R^{15}$ are each an alkyl group having 1 to 10 carbon atoms or an aryl group, and $M^1$ is magnesium or manganese), and compounds represented by the general formula: $R^{14}M^1X^4$ (wherein $R^{14}$ is an alkyl group having 1 to 10 carbon atoms or an aryl group, $M^1$ is magnesium or manganese, and $X^4$ is a halogen atom). Concrete examples are ethylbutylmagnesium, dibutylmagnesium, diethylmagnesium, dihexylmagnesium, dimethylmanganese, diphenylmanganese, ethylmagnesium chloride, ethylmagnesium iodide, and methylmanganese iodide. In addition, complex salts of these magnesium or manganese compounds and organoaluminum or organozinc compounds can be used.

Hydrogen-containing phosphorus compounds include alkyl-or aryl-phosphines such as methylphosphine, ethylphosphine, propylphosphine, butylphosphine, phenylphosphine and the like, dialkyl- or

diaryl-phosphines such as diethylphosphine, dipropylphosphine, dibutylphosphine, and diphenylphosphine, alkyl- or aryl-phosphonic acids such as ethylphosphonic acid, and propylphosphonic acid, dialkyl- or diaryl-phosphinic acids such as diethylphosphinic acid, dipropylphosphinic acid, dibutylphosphinic acid, didodecylphosphinic acid, and diphenylphosphinic acid, esters of phosphorous acid such as methyl phosphite, butylphosphite, dimethyl phosphite, dipropyl phosphite, dibutyl phosphite, didodecyl phosphite, dilauryl phosphite, dioleyl phosphite, and diphenyl phosphite, esters of phosphoric acid such as ethyl phosphate, propyl phosphate, dipropyl phosphate, dibutyl phosphate, dioctyl phosphate, and didodecyl phosphate.

The magnesium or manganese alkoxide includes magnesium dialkoxides such as magnesium dimethoxide, magnesium diethoxide, magnesium dipropoxide, magnesium dibutoxide, magnesium diheptoxide, magnesium dioctoxide, and magnesium distearoxide, and manganese dialkoxides such as manganese dibutoxide, manganese dioctoxide, and manganese distearoxide. Of these, long chain alkyl group-containing compounds are preferred because they provide a system which forms micro gel or is soluble in a hydrocarbon solvent such as hexane, heptane and toluene, and which is of high activity. Particularly preferred are those having a hydrocarbon group having 6 to 20 carbon atoms.

In the present invention, as the component (B) of the catalyst, the halide of magnesium, manganese or calcium can be used. Although there are various metal halides, those compounds, the electronegativity of metal ion of which is smaller than that of chromium (II) ion are preferred. Therefore, as the component (B) of the catalyst of the present invention, a compound selected from the above three types of metal halides is used. More specifically, $MgCl_2$, $MgBr_2$, $MgI_2$, $MnCl_2$, $MnBr_2$, $MnI_2$, $CaCl_2$, $CaBr_2$, and $CaI_2$ are used.

As the component (B) of the catalyst of the present invention, the above compounds are used singly or as mixtures comprising two or more thereof.

In the present invention, as the transition metal compound component of the catalyst, the components (A) and (B) as described above are used.

In preparing the transition metal compound component of the catalyst, usually, the components (A) and (B) are added to and mixed with a suitable solvent, and stirred at a temperature of 0 to 200 °C, preferably 30 to 100 °C for about 5 to 60 minutes. The mixing ratio of the component (A) to the component (B) varies with the type of the compound used and so forth. In general, as the ratio of the component (B) to the component (A) is greater, the activity of the resulting catalyst is higher. More specifically, the amount of the component (B) is chosen from the range of 1 to 100 mol, preferably 20 to 50 mol per mol of the component (A).

In the process of the present invention, as the component (C), i.e., organometallic compound component, an organometallic compound of Groups I to V of the Periodic Table is used.

As the organometallic compound of Groups I to V of the Periodic Table, a compound represented by the general formula (II):

$$R^{16}{}_{k}M^{2}X^{5}{}_{i-k}$$

is used. In the general formula (II), $R^{16}$ represents an alkyl group having 1 to 20 carbon atoms, an alkenyl group, a cycloalkyl group, an aryl group or an aralkyl group. Representative examples of $R^{16}$ are a methyl group, an ethyl group, a n-propyl group, an iso-propyl group, a n-butyl group, an iso-butyl group, a hexyl group, a 2-ethylhexyl group, and a phenyl group. $M^2$ is lithium, sodium, potassium, magnesium, zinc, cadmium, aluminum, boron, gallium, silcon, tin, antimony or bismuth. $X^5$ is a halogen atom, e.g., chlorine, bromine and iodine. i is an atomic valency of $M^2$ and usually a real number of 1 to 5. k is a real number of $0 < k \leqq i$.

Representative examples of the compound represented by the general formula (II) include alkyllithium such as methyllithium, ethyllithium, propyllithium, butyllithium and the like, alkylmagnesium such as diethylmagnesium, ethylbutylmagnesium, di-n-butylmagnesium, and ethylchloromagnesium, dialkylzinc such as dimethylzinc, diethylzinc, dipropylzinc, and dibutylzinc, alkylgallium compounds such as trimethylgallium, triethylgallium, tripropylgallium, and tributylgallium, alkylboron compounds such as triethylboron, tripropylboron, and tributylboron, alkyltin compounds such as tetraethyltin, tetrapropyltin, tributylchlorotin, tetraphenyltin, and triphenylchlorotin. Suitable examples of the compound in which $M^2$ is aluminum include trialkylaluminum compounds such as trimethylaluminum, triethylaluminum, triisopropylaluminum, triisobutylaluminum, and trioctylaluminum, dialkylaluminum monohalide such as diethylaluminum monochloride, diethylaluminum monobromide, diethylaluminum monoiodide, diisopropylaluminum monochloride, diisobutylaluminum monochloride, and dioctylaluminum monochloride, alkylaluminum sesquihalide such as methylaluminum sesquichloride, ethylaluminum sesquichloride, ethylaluminum sesquibromide, and butylaluminum sesquichloride. In addition, mixtures of the above compounds are suitable. In addition, alkyl

group-containing aluminoxane resulting from the reaction of alkylaluminum and water can be used.

Of these, aluminum compounds, tin compounds and magnesium compounds are preferably used.

In the process of the present invention, the ratio of the chromium compound as the component (A) to the organometallic compound of Groups I to V as the component (C) is not critical. Usually they are used in such a manner that the molar ratio of the metal atom in the organometallic compound to the chromium atom in the chromium compound is 0.1:1 to 5,000:1 and preferably 1:1 to 1,000:1.

In accordance with the process of the present invention, ethylene and unsaturated carboxylic acid or its ester are copolymerized by the use of the above catalyst in the presence of a Lewis acid to produce the objective ethylene-based copolymer.

As the Lewis acid, Lewis acid compounds capable of forming a complex with lone pair of a polar group, such as halogenated compounds and alkylated compounds of Groups I to V, or Group VIII of the Periodic Table, can be used. In particular, the halogenated compounds of aluminum, boron, zinc, tin, magnesium, and antimony, such as aluminum chloride, aluminum bromide, ethylaluminum dichloride, ethylaluminum sesquichloride, diethylaluminum chloride, triethylaluminum, trimethylaluminum, boron trichloride, zinc chloride, tin tetrachloride, alkyltin halide, magnesium chloride, antimony pentachloride, and antimony trichloride, are preferred. Particularly preferred are aluminum chloride, aluminum bromide, and ethylaluminum dichloride.

The unsaturated carboxylic acid or its ester to be copolymerized with ethylene is not critical. Usually, compounds represented by the general formula (III):

$$CH_2=\overset{\overset{\displaystyle R^1}{|}}{C}-(CH_2)_p-COOR^2$$

are used. In the general formula (III), $R^1$ is a hydrogen atom, a halogen atom, an alkyl group having 1 to 20 carbon atoms, an alkenyl group having 1 to 20 carbon atoms, a cycloalkyl group having 3 to 20 carbon atoms, an aryl group having 6 to 20 carbon atoms, or an aralkyl group having 7 to 20 carbon atoms, $R^2$ is a hydrogen atom, an alkyl group having 1 to 20 carbon atoms, an alkenyl group having 1 to 20 carbon atoms, a cycloalkyl group having 3 to 20 carbon atoms, an aryl group having 6 to 20 carbon atoms, or an aralkyl group having 7 to 20 carbon atoms, and p is an integer of 0 to 20.

Representative examples of the unsaturated carboxylic acid represented by the general formula (III) are acrylic acid, methacrylic acid, α-chloroacrylic acid, 3-butenic acid, 4-pentenic acid, 6-heptenic acid, 8-nonenic acid, and 10-undecenic acid. These compounds can be used alone or as mixtures comprising two or more thereof.

Representative examples of the esters of unsaturated carboxylic acid represented by the general formula (III) are acrylic acid esters such as methyl acrylate, ethyl acrylate, propyl acrylate, butyl acrylate, n-octyl acrylate, 2-ethylhexyl acrylate, and benzyl acrylate; α-substituted acrylic acid esters such as methyl methacrylate, ethyl methacrylate, butyl methacrylate, 2-ethylhexyl methacrylate, phenyl methacrylate, methyl α-chloroacrylate, and ethyl α-chloroacrylate; and carboxylic acid esters containing a terminal double bond, such as methyl 3-butenate, ethyl 3-butenate, methyl 4-pentenate, ethyl 6-heptenate, methyl 8-nonate, methyl 10-undecenate, propyl 10-undecenate, butyl 10-undecenate, hexyl 10-undecenate, octyl 10-undecenate, decyl 10-undecenate, cyclohexyl 10-undecenate, and phenyl 10-undecenate. These compounds can be used alone or in combination with one another.

The ratio of the above unsaturated carboxylic acid or its ester to ethylene can be determined appropriately depending on physical properties required for the objective copolymer.

In connection with the ratio of the Lewis acid to the unsaturated carboxylic acid or its ester, the Lewis acid is used in a proportion of not more than 30, preferably 0.2 to 5 per mol of the unsaturated carboxylic acid or its ester.

The process of polymerization is not critical; any of slurry polymerization, solution polymerization, gas phase polymerization and so forth can be employed. Furthermore, the process may be continuous polymerization or non-continuous polymerization. In this case, as the polymerization solvent, aliphatic hydrocarbon, alicyclic hydrocarbon, aromatic hydrocarbon, and halogenated hydrocarbon are used. More specifically, pentane, hexane, heptane, octane, decane, dodecane, cyclohexane, benzene, toluene, xylene, ethylbenzene, chlorobenzene, ethylene dichloride, and kerosene are used. With regard to polymerization conditions, the reaction pressure is atmospheric pressure to 98 barG (100 $kg/cm^2G$), preferably atmospheric pressure to 30 barG (30 $kg/cm^2G$), and the reaction temperature is -80 °C to 200 °C, preferably -50 °C to

80°C. The reaction time is not critical; usually it is chosen from the range of 1 minute to 10 hours. Adjustment of molecular weight in polymerization can be carried out by known techniques such as with hydrogen.

In the process of the present invention, by using the catalyst comprising the components (A), (B) and (C), copolymerization can be carried out with high activity and in good yield, and the conversion of unsaturated carboxylic acid or its ester into the copolymer can be increased.

The ethylene-based copolymer obtained by the process of the present invention is improved over an ethylene homopolymer not only in printing properties and bonding properties but in low temperature flexibility, low temperature impact resistance, anti-bending cracking properties and transparency.

The present invention is described in greater detail with reference to the following examples, although it is not limited thereto.

## EXAMPLE 1

In a 200-milliliter flask purged with argon were placed 50 ml of dehydrated heptane and 6.45 g (20 m mol) of di-2-ethylhexyl phosphate, and then 30 ml of a heptane solution containing 10 m mol of ethylbutylmagnesium was dropped at room temperature over 20 minutes. Then, the resulting mixture was raised in temperature and reacted under reflux of the heptane for 3 hours. The heptane was then distilled away, and 100 ml of toluene was added and 0.90 g (1 m mol) of chromium stearate was added. The reaction was performed at 100°C for 2 hours to obtain a chromium-containing catalyst component.

In a 1-liter stainless steel autoclave was introduced 400 ml of dehydrated toluene, and then 10.0 m mol of a toluene solution containing a mixture of equimolar amounts of ethyl acrylate and aluminum trichloride was added. Then, at 20°C, 5 m mol of diethylaluminum chloride and 0.01 m mol of the chromium-containing catalyst component prepared in the above were added with stirring. Then, ethylene was continuously introduced and the total pressure was maintained at 10 barG (10 $kg/cm^2G$). The polymerization reaction was performed for 3 hours. After decreasing the pressure, the copolymer formed was introduced into methanol and filtered, and then subjected to de-ashing using a mixture of hydrochloric acid and methanol. Then, acetone extraction was applied for 5 hours to remove amorphous polymers. The extraction residue was dried under pressure at 80°C for 2 hours to obtain 42.3 g of a white copolymer.

An infrared absorption spectral analysis showed that the copolymer had an absorption ascribable to the carbonyl group of carboxylic acid ester as 1730 $cm^{-1}$ and an absorption ascribable to the ether bond at 1160 $cm^{-1}$. The ethyl acrylate content of the copolymer as determined based on the intensity of the absorption was 0.48 mol%. As a result, the catalyst activity was 81.3 kg/g•Cr and the conversion of ethyl acrylate into the copolymer was 71.9%. The results are shown in Table 1.

## EXAMPLE 2

The procedure of Example 1 was repeated wherein in the production of the copolymer, triethylaluminum was used in place of diethylaluminum chloride. The results are shown in Table 1.

## COMPARATIVE EXAMPLE 1

The procedure of Example 1 was repeated wherein as the chromium-containing catalyst component, chromium stearate alone was used. The results are shown in Table 1.

## EXAMPLE 3

In a 200-milliliter flask purged with argon were placed 100 ml of dehydrated toluene, 2.21 g (3.8 m mol) of magnesium stearate and 0.34 g (0.38 m mol) of chromium stearate, which were then reacted at 100°C for 2 hours to obtain a chromium-containing catalyst component.

A copolymer was produced under the same conditions as in Example 1 with the exception that as the chromium-containing catalyst component, the one obtained in the above was used. The results are shown in Table 1.

## EXAMPLE 4

The same procedure of Example 1 was repeated except that 20 m mol of a toluene solution containing a mixture of equimolar amounts of ethylacrylate and aluminum trichloride was used in place of 10 m mol of

said toluene solution. The results are shown in Table 1.

EXAMPLE 5

In a 200-milliliter flask purged with argon were placed ten stainless steel balls each having a diameter of 5 to 10 mm, and then 3.6 g (4 m mol) of chromium stearate and 100 ml of toluene were introduced and ball mill grinding was performed with stirring at room temperature for 10 hours. Then, toluene was added to make the total volume 200 ml. Thus a black-purple chromium catalyst component in gel form was obtained.

In a 200-milliliter flask purged with argon were placed 100 ml of dehydrated toluene, 34.2 m mol of a 2-ethyl-1-hexanol solution containing 3.8 m mol of magnesium chloride and 0.38 m mol of the above chromium catalyst component, which were then reacted at 100°C for 2 hours to obtain a chromium-containing catalyst component.

A copolymer was produced under the same conditions as in Example 1 with the exception that as the chromium-containing catalyst component, the one obtained in the above was used. The results are shown in Table 1.

EXAMPLE 6

The procedure of Example 3 was repeated wherein manganese stearate was used in place of magnesium stearate in Example 3. The results are shown in Table 1.

EXAMPLE 7

In a 300-milliliter flask purged with argon were placed 1.1 g (4.45 m mol) of chromium acetate monohydrate ($Cr(CH_3COO)_3 \cdot H_2O$), 40 ml of anhydrous acetic acid and 40 ml of acetic acid, which were then reacted with stirring under reflux for 20 hours. Then, the acetic acid and anhydrous acetic acid were distilled away under reduced pressure to obtain a green solid. This solid was dried in a stream of argon at 120°C for 48 hours. After lowering the temperature, toluene was added to obtain 200 ml of a green catalyst slurry.

In a 200-milliliter flask purged with argon were placed 100 ml of dehydrated toluene, 2.21 g (3.8 m mol) of magnesium stearate and 0.13 g (0.38 m mol) of the above adduct, which were then reacted at 100°C for 2 hours to obtain a chromium-containing catalyst.

A copolymer was produced under the same conditions as in Example 1 with the exception that the chromium-containing catalyst component obtained in the above was used. The results are shown in Table 1.

EXAMPLE 8

0.84 m mol of the green slurry of the chromium acetate adduct obtained in Example 7 was dissolved in 167 m mol of 2-ethyl-1-hexanol to obtain Solution (I). Independently, 10 m mol of magnesium chloride was dissolved in 90 m mol of 2-ethyl-1-hexanol to obtain Solution (II).

A copolymer was produced in the same manner as in Example 1 with the exception that as the chromium-containing catalyst component, 0.04 m mol (calculated as chromium) of Solution (I) and 0.1 m mol (calculated as magnesium) of Solution (II) prepared in the above were used. The results are shown in Table 1.

COMPARATIVE EXAMPLE 2

The procedure of Example 7 was repeated with the exception that as the chromium-containing catalyst component, the green slurry of the chromium acetate adduct alone was used. The results are shown in Table 1.

EXAMPLE 9

2.1 g (6 m mol) of chromium trisacetylacetonate was dissolved in 200 ml of toluene to obtain Solution (I).

In a 200-milliliter flask were placed 50 ml of heptane and 6.45 g (20 m mol) of di-2-ethylhexyl phosphate, and then 30 ml of a heptane solution containing 10 m mol of ethylbutylmagnesium was dropped at room temperature over 20 minutes. The resulting mixture was raised in temperature and reacted under

reflux of the heptane for 3 hours. Then, the heptane was distilled away, and 100 ml of toluene was added to obtain Solution (II).

A copolymer was produced in the same manner as in Example 1 with the exception that as the chromium-containing catalyst, 0.01 m mol (calculated as chromium) of Solution (I) and 0.4 m mol of Solution (II) prepared in the above were used. The results are shown in Table 1.

EXAMPLE 10

The procedure of Example 3 was repeated wherein chromium trisacetylacetonate was used in place of the chromium stearate. The results are shown in Table 1.

EXAMPLE 11

The procedure of Example 3 was repeated wherein manganese stearate was used in place of the magnesium stearate, and chromium trisacetylacetonate was used in place of the chromium stearate. The results are shown in Table 1.

COMPARATIVE EXAMPLE 3

The procedure of Example 9 was repeated wherein as the chromium-containing catalyst component, a toluene solution of chromium trisacetylacetonate was used. The results are shown in Table 1.

EXAMPLE 12

556 mg (1.61 m mol) of chromium tetra-tert-butoxide was dissolved in 50 ml of toluene to obtain Solution (I).

In a 200-milliliter flask purged with argon were placed 50 ml of dehydrated heptane and 6.45 g (20 m mol) of di-2-ethylhexyl phosphate, and then 30 ml of a heptane solution containing 10 m mol of ethylbutylmagnesium was dropped at room temperature for 20 minutes. Then the resulting mixture was raised in temperature and reacted under reflux of the heptane for 3 hours. Then the heptane was distilled away, and 100 ml of toluene was added to obtain Solution (II).

A copolymer was produced in the same manner as in Example 1 with the exception that as the chromium-containing catalyst component, 0.01 m mol (calculated as chromium) of Solution (I) and 0.1 m mol (calculated as magnesium) of Solution (II) prepared in the above were used. The results are shown in Table 1.

EXAMPLE 13

The procedure of Example 3 was repeated wherein chromium tetra-tert-butoxide was used in place of the chromium stearate. The results are shown in Table 1.

EXAMPLE 14

The procedure of Example 3 was repeated wherein biscyclopentadienylchromium was used in place of the chromium stearate. The results are shown in Table 1.

EXAMPLE 15

The procedure of Example 3 was repeated wherein 4.54 g (7.6 m mol) of calcium stearate was used in place of the magnesium stearate. The results are shown in Table 1.

Table 1

| Run No. | Yield of Copolymer (g) | Catalyst Activity (kg/g·Cr) | Unsaturated Carboxylic Acid or Ester Content of Copolymer (mol%) | Conversion of Unsaturated Carboxylic Acid or Ester into Copolymer (%) |
|---|---|---|---|---|
| Example 1 | 42.3 | 81.3 | 0.48 | 71.9 |
| " 2 | 28.0 | 53.8 | 0.28 | 28.0 |
| " 3 | 38.9 | 74.8 | 0.42 | 58.4 |
| " 4 | 35.8 | 68.8 | 1.0 | 62.7 |
| " 5 | 32.4 | 62.3 | 0.51 | 58.3 |
| " 6 | 19.4 | 37.3 | 0.57 | 38.8 |
| " 7 | 30.1 | 57.9 | 0.51 | 54.2 |
| " 8 | 26.5 | 51.0 | 0.71 | 66.3 |
| " 9 | 30.2 | 58.1 | 0.62 | 66.4 |
| " 10 | 27.3 | 52.5 | 0.65 | 60.1 |
| " 11 | 14.8 | 28.5 | 0.54 | 28.1 |
| " 12 | 23.4 | 45.0 | 0.45 | 37.4 |
| " 13 | 22.5 | 43.3 | 0.42 | 33.8 |
| " 14 | 10.8 | 20.8 | 0.54 | 20.5 |
| " 15 | 11.1 | 21.3 | 0.61 | 45.8 |
| Comparative Example 1 | 2.3 | 4.5 | 1.1 | 9.2 |
| " 2 | 1.8 | 3.8 | 1.5 | 9.0 |
| " 3 | 1.2 | 2.3 | 1.5 | 6.4 |

## Claims

1. A process for producing an ethylene-based copolymer which comprises copolymerizing ethylene and unsaturated carboxylic acid or its ester in the presence of a Lewis acid by the use of a catalyst

comprising:

(A) a chromium compound;

(B) at least one compound selected from the group consisting of carboxylic acid salts, organic phosphoric acid salts, organic phosphorous acid salts, alkoxide and halide of each of magnesium and manganese, and carboxylic acid salts and halide of calcium; and

(C) an organometallic compound of Groups I to V of the Periodic Table.

**2.** The process as claimed in Claim 1 wherein the unsaturated carboxylic acid or its ester is a compound represented by the general formula:

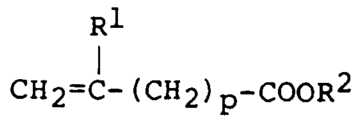

(wherein $R^1$ is a hydrogen atom, a halogen atom, an alkyl group having 1 to 20 carbon atoms, an alkenyl group having 1 to 20 carbon atoms, a cycloalkyl group having 3 to 20 carbon atoms, an aryl group having 6 to 20 carbon atoms or an aralkyl group having 7 to 20 carbon atoms, $R^2$ is a hydrogen atom, an alkyl group having 1 to 20 carbon atoms, an alkenyl group having 1 to 20 carbon atoms, a cycloalkyl group having 3 to 20 carbon atoms, an aryl group having 6 to 20 carbon atoms or an aralkyl group having 7 to 20 carbon atoms, and p is an integer of 0 to 20).

**3.** The process as claimed in Claim 1, wherein the chromium compound of component (A) is at least one compound selected from the group consisting of a carboxylic acid salts of chromium, chromium alkoxy compounds, chromium chelate compounds, chromium $\pi$-complexes, chromium aryl compounds and halogenated chromium.

**4.** The process as claimed in Claim 3, wherein the carboxylic acid salts of chromium is a compound selected from the compounds represented by the general formulae:

$Cr(OCOR^3)_3$, $Cr(OCOR^3)_3 \cdot (R^4OR^5)_\ell$, $Cr(OCOR^3)_3 \cdot (R^6COOR^7)_\ell$, $Cr(OCOR^3)_3 \cdot R^8(COOR^9)_2$, $Cr(OCOR^3)_3 \cdot (R^{10}{}_2CO)_\ell$ and $Cr(OCOR^3)_3 \cdot [(R^{11}CO)_2O)]_\ell$

(wherein $R^3$ to $R^{11}$ are each an alkyl group having 1 to 20 carbon atoms, an alkenyl group, a vinyl group, a cycloalkyl group, an aryl group, a haloalkyl group, an aralkyl group or a hydrogen atom, and $\ell$ is a real number of 1 or more).

**5.** The process as claimed in Claim 3, wherein the chromium compound is a compound selected from the group consisting of chromium stearate, chromium acetate monohydrate, chromium trisacetylacetonate, chromium tetra-tert-butoxide, biscyclopentadienylchromium and mixture thereof.

**6.** The process as claimed in Claim 1, wherein the compound of component (B) is a compound selected from the group consisting of a reaction product of ethylbutylmagnesium and di-2-ethylhexyl phosphate, magnesium stearate, magnesium chloride and calcium stearate.

**7.** The process as claimed in Claim 1, wherein the compound of component (C) is a compound selected from the group consisting of diethylaluminum chloride and triethylaluminum.

## Patentansprüche

**1.** Verfahren zur Herstellung eines Copolymers auf Ethylen-Basis, das umfaßt das Copolymerisieren von Ethylen und einer ungesättigten Carbonsäure oder ihres Esters in Gegenwart einer Lewis-Säure durch Verwendung eines Katalysators, der umfaßt:

A) eine Chromverbindung;

B) mindestens eine Verbindung, ausgewählt aus der Gruppe, die besteht aus Carbonsäuresalzen, organischen Phosphorsäuresalzen, organischen Phosphorigsäuresalzen, einem Alkylat und Halogenid jeweils von Magnesium und Mangan und Carbonsäuresalzen und einem Halogenid von Calcium; und

C) eine metallorganische Verbindung der Gruppen I bis V des Periodischen Systems der Elemente.

2. Verfahren nach Anspruch 1, worin die ungesättigte Carbonsäure oder ihr Ester eine Verbindung der allgemeinen Formel ist

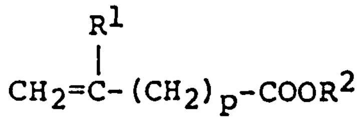

worin bedeuten

$R^1$ ein Wasserstoffatom, ein Halogenatom, eine Alkylgruppe mit 1 bis 20 Kohlenstoffatomen, eine Alkenylgruppe mit 1 bis 20 Kohlenstoffatomen, eine Cycloalkylgruppe mit 3 bis 20 Kohlenstoffatomen, eine Arylgruppe mit 6 bis 20 Kohlenstoffatomen oder eine Aralkylgruppe mit 7 bis 20 Kohlenstoffatomen,

$R^2$ ein Wasserstoffatom, eine Alkylgruppe mit 1 bis 20 Kohlenstoffatomen, eine Alkenylgruppe mit 1 bis 20 Kohlenstoffatomen, eine Cycloalkylgruppe mit 3 bis 20 Kohlenstoffatomen, eine Arylgruppe mit 6 bis 20 Kohlenstoffatomen oder eine Aralkylgruppe mit 7 bis 20 Kohlenstoffatomen und

p eine ganze Zahl von 0 bis 20.

3. Verfahren nach Anspruch 1, worin die Chromverbindung der Komponente (A) mindestens eine Verbindung ist, die ausgewählt wird aus der Gruppe, die besteht aus den Carbonsäuresalzen von Chrom, Chromalkoxyverbindungen, Chromchelatverbindungen, Chrom-$\pi$-Komplexen, Chromarylverbindungen und halogeniertem Chrom.

4. Verfahren nach Anspruch 3, worin die Carbonsäuresalze von Chrom darstellen eine Verbindung, die ausgewählt wird aus Verbindungen mit den allgemeinen Formeln:

$Cr(OCOR^3)_3$, $Cr(OCOR^3)_3 \cdot (R^4OR^5)_\ell$, $Cr(OCOR^3)_3 \cdot (R^6COOR^7)_\ell$, $Cr(OCOR^3)_3 \cdot R^8(COOR^9)_2$, $Cr(OCOR^3)_3 \cdot (R^{10}{}_2CO)_\ell$ und $Cr(OCOR^3)_3 \cdot [(R^{11}CO)_2O]_\ell$

(worin $R^3$ bis $R^{11}$ jeweils für eine Alkylgruppe mit 1 bis 20 Kohlenstoffatomen, eine Alkenylgruppe, eine Vinylgruppe, eine Cycloalkylgruppe, eine Arylgruppe, eine Halogenalkylgruppe, eine Aralkylgruppe oder ein Wasserstoffatom und l für eine reale Zahl von 1 oder mehr stehen).

5. Verfahren nach Anspruch 3, worin die Chromverbindung eine Verbindung darstellt, die ausgewählt wird aus der Gruppe, die besteht aus Chromstearat, Chromacetatmonohydrat, Chromtrisacetylacetonat, Chromtetra-tert-butylat, Biscyclopentadienylchrom und einer Mischung davon.

6. Verfahren nach Anspruch 1, worin die Verbindung der Komponente (B) eine Verbindung darstellt, die ausgewählt wird aus der Gruppe, die besteht aus einem Reaktionsprodukt von Ethylbutylmagnesium und Di-2-ethylhexylphosphat, Magnesiumstearat, Magnesiumchlorid und Calciumstearat.

7. Verfahren nach Anspruch 1, worin die Verbindung der Komponente (C) eine Verbindung darstellt, die ausgewählt wird aus der Gruppe, die besteht aus Diethylaluminiumchlorid und Triethylaluminium.

## Revendications

1. Procédé de production d'un copolymère d'éthylène, qui comprend la copolymérisation d'éthylène et d'un acide carboxylique insaturé ou ester de celui-ci en présence d'un acide de Lewis en utilisant un catalyseur comprenant :

(A) un composé du chrome ;

(B) au moins un composé choisi dans le groupe formé par les sels d'acide carboxylique, sels organiques d'acide phosphorique, sels organiques d'acide phosphoreux, alcoolates et halogénures du magnésium ou du manganèse, et les sels d'acide carboxylique et halogénures du calcium ; et

(C) un composé organométallique d'un métal des Groupes I à V du Tableau Périodique.

2. Procédé selon la revendication 1, dans lequel l'acide carboxylique insaturé ou ester de celui-ci est un composé représenté par la formule générale :

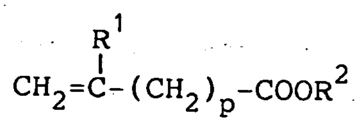

(dans laquelle $R^1$ est un atome d'hydrogène, un atome d'halogène, un groupe alkyle ayant 1 à 20 atomes de carbone, un groupe alcényle ayant 1 à 20 atomes de carbone, un groupe cycloalkyle ayant 3 à 20 atomes de carbone, un groupe aryle ayant 6 à 20 atomes de carbone ou un groupe aralkyle ayant 7 à 20 atomes de carbone, $R^2$ est un atome d'hydrogène, un groupe alkyle ayant 1 à 20 atomes de carbone, un groupe alcényle ayant 1 à 20 atomes de carbone, un groupe cycloalkyle ayant 3 à 20 atomes de carbone, un groupe aryle ayant 6 à 20 atomes de carbone ou un groupe aralkyle ayant 7 à 20 atomes de carbone, et p est un nombre entier de 0 à 20).

**3.** Procédé selon la revendication 1, dans lequel le composé du chrome du composant (A) est au moins un composé choisi dans le groupe formé par les sels d'acide carboxylique de chrome, les composés alcoxylés de chrome, les chélates de chrome, les complexes $\pi$ de chrome, les composés arylés de chrome et le chrome halogéné.

**4.** Procédé selon la revendication 3, dans lequel le sel d'acide carboxylique du chrome est un composé choisi parmi les composés représentés par les formules générales :

$Cr(OCOR^3)_3$, $Cr(OCOR^3)_3 \cdot (R^4OR^5)_\ell$, $Cr(OCOR^3)_3 \cdot (R^6COOR^7)_\ell$, $Cr(OCOR^3)_3 \cdot R^8(COOR^9)_2$, $Cr(OCOR^3)_3 \cdot (R^{10}{}_2CO)_\ell$ et $Cr(OCOR^3)_3 \cdot [(R^{11}CO)_2O)]_\ell$

(dans lesquelles $R^3$ à $R^{11}$ sont chacun un groupe alkyle ayant 1 à 20 atomes de carbone, un groupe alcényle, un groupe vinyle, un groupe cycloalkyle, un groupe aryle, un groupe halogénoalkyle, un groupe aralkyle ou un atome d'hydrogène, et $\ell$ est un nombre réel égal ou supérieur à 1).

**5.** Procédé selon la revendication 3, dans lequel le composé du chrome est composé choisi dans le groupe formé par le stéarate de chrome, l'acétate de chrome monohydraté, le trisacétylacétonate de chrome, le tétra-*tert*-butylate de chrome, le biscyclopentadiénylchrome et leurs mélanges.

**6.** Procédé selon la revendication 1, dans lequel le composé du composant (B) est un composé choisi dans le groupe formé par un produit réactionnel d'éthylbutylmagnésium et de phosphate de di-2-éthylhexyle, le stéarate de magnésium, le chlorure de magnésium et le stéarate de calcium.

**7.** Procédé selon la revendication 1, dans lequel le composé du composant (C) est un composé choisi dans le groupe formé par le chlorure de diéthylaluminium et le triéthylaluminium.